# EUROPÄISCHE PATENTSCHRIFT

(11) **EP 1 668 263 B1**
(45) Veröffentlichungstag und Bekanntmachung des Hinweises auf die Patenterteilung: **24.03.2010**
(21) Anmeldenummer: 03748113.2
(22) Anmeldetag: 02.10.2003
(51) Int. Cl.: F16C 13/04

(54) **DREHLAGERUNG EINES ROTATIONSKÖRPERS**
PIVOT BEARING ARRANGEMENT OF A ROTATIONAL BODY
ENSEMBLE SUPPORT ROTATIF D'UN CORPS ROTATIF

(43) Veröffentlichungstag der Anmeldung: 14.06.2006
(73) Patentinhaber: Landwehr, Wilhelm, 26388 Wilhelmshaven (DE)
(72) Erfinder: Landwehr, Wilhelm, 26388 Wilhelmshaven (DE)
(74) Vertreter: Wess, Wolfgang
(86) Internationale Anmeldenummer: PCT/EP2003/010979
(87) Internationale Veröffentlichungsnummer: WO 2005/033532

(56) Entgegenhaltungen:
- BE-A- 553 412
- DE-A- 3 306 745
- DE-U- 20 208 073
- GB-A- 810 791
- US-A- 1 981 096
- US-A- 2 010 752

## Beschreibung

Die Erfindung betrifft die Drehlagerung eines Rotationskörpers, d.h. eine Anordnung umfassend einen Stützkörper, den Rotationskörper und eine Mehrzahl von Tragrollen, über die der Rotationskörper an dem Stützkörper durch Wälzkontakt drehbar abgestützt wird.

Die rotierende Lagerung von Achsen und Wellen oder von umlaufenden Bauteilen auf Achsen mit Hilfe von Wälzlagern erlaubt je nach Ausführung der Lager die Übertragung von axialen und/oder radialen Kräften sowie Momenten von der Achse/Welle auf die umgebende Struktur.

Ein Wälzlager besteht im Allgemeinen aus einer inneren und einer äußeren Lauffläche, zwischen denen eine Anzahl Wälzkörper angebracht ist. Die Wälzkörper rollen auf den Laufflächen ab, so dass sich aufgrund der Relativbewegungen an den Kontaktstellen von Wälzkörpern und Laufflächen eine Rotationsbewegung zwischen den Laufflächen ergibt. Die Laufflächen werden im Allgemeinen von einem äußeren und einem inneren Lagerring bereitgestellt.

Aus der Vorgabe, die Achse/Welle drehbar mit der umgebenden Struktur bzw. das umgebende Bauteil drehbar mit der Achse zu verbinden, folgt, dass der innere Lagerring die Achse/Welle umgeben muss, d. h. er ist mit einer Öffnung versehen, die einen entsprechenden Abschnitt der Achse/Welle aufnimmt. Der Außenring ist entsprechend größer.

Bei der Lagerung großer Achsen/Wellen oder großer Bauteile auf entsprechend großen Achsen erfordern sowohl die Abmessungen der Achse/Welle sowie die zu übertragenden Kräfte und Momente, dass die Wälzlager z. T. eine enorme Größe erreichen und entsprechend teuer werden.

Aufgrund des Verschleißes an Wälzkörpern und Laufbahnen vergrößert sich die Lagerluft, und die Laufgenauigkeit des Lagers nimmt ab. Bei Erreichen einer, von der jeweiligen Anwendung abhängigen, Verschleißgrenze muss die Lagerung erneuert oder überholt werden. Dieses erfordert oftmals den Ausbau der Achse/Welle und damit unter Umständen lange und teure Ausfallzeiten der Maschine oder Anlage.

Die DE 33 06 745 A1 offenbart ein Lager für Drehtrommeln und sonstige rotierende Zylinder großer Abmessungen, das eine dem Durchmesser der Drehtrommel angepasste, sattelförmige Aufnahme und zwischen der sattelförmigen Aufnahme und dem Umfang der Drehtrommel Tragrollen aufweist, über die sich die Drehtrommel in der sattelförmigen Aufnahme abstützt.
Die sattelförmige Aufnahme erstreckt sich nur über einen Teil des Drehtrommelumfangs.

Die US 2,010,752, die US 1,981,096 und die BE 553 412 haben weitere Drehlagerungen mit einzeln drehbar abgestützten Tragrollen zum Gegenstand.

Die GB 810,791 beschreibt eine Drehlagerung mit einem Rotationskörper, der auf vier Tragrollen um eine horizontale Drehachse drehbar gelagert ist. Der Rotationskörper liegt mit seiner in der jeweiligen Drehwinkelposition unteren Hälfte auf den Tragrollen auf. Die Tragrollen sind einzeln abgestützt drehbar gelagert. Die Rotationsachsen der beiden äußeren oberen Tragrollen sind verstellbar, um die Drehlagerung im Falle von Verschleiß nachjustieren zu können. Die beiden inneren unteren Tragrollen werden je von einem Schwenkarm getragen, der um die Rotationsachse der jeweils nächsten oberen Tragrolle schwenkbar ist. Die beiden Schwenkarme werden mittels Federkraft gespannt, so dass die beiden unteren Tragrollen gegen den Rotationskörper gedrückt werden. Des Weiteren wird auf die Möglichkeit hingewiesen, dass gegen einen obersten Punkt der vom Rotationskörper gebildeten Lauffläche eine weitere Rolle drücken kann, um zu verhindern, dass der Rotationskörper aus dem von den vier Tragrollen gebildeten Lagerbett springt.

Es ist eine Aufgabe der Erfindung, die Erneuerung und/oder die Überholung einer Drehlagerung eines Rotationskörpers zu erleichtern. Die Drehlagerung sollte erneuerbar oder reparierbar sein, ohne dass der drehgelagerte Rotationskörper demontiert oder im Ganzen aus seiner Drehlagerung ausgebaut werden muss.

Nach einem anderen Aspekt der Erfindung besteht eine Aufgabe darin, die regelmäßige Gebrauchsdauer einer Drehlagerung bis zu einer Erneuerung und/oder Überholung zu verlängern.

Durch den Gegenstand von Anspruch 1 wird insbesondere die erstgenannte Aufgabe gelöst. Zur Lösung der zweitgenannten Aufgabe schlägt die Erfindung eine Justierbarkeit der Drehlagerung vor, mit der ein Lagerspiel ausgeglichen werden kann.

Soweit in den Ansprüchen von einem Körper, insbesondere einem Rotationskörper und einem Stützkörper, die Rede ist, wird unter diesem Begriff sowohl ein in einem Stück gebildeter Körper als auch eine aus separaten Teilen zusammengesetzte Struktur, die Bewegungen im Ganzen ausführt, verstanden. Der derart verstandene Rotationskörper ist an dem derart verstandenen Stützkörper drehbar abgestützt, d.h. drehbar gelagert. Nach der Erfindung sind mehrere Tragrollen j e um eine eigene Tragachse einzeln drehbar gelagert und nicht, wie bei Standardwälzlagern, in einem gemeinsamen Lagerkäfig. Die Lagerung kann insbesondere an einem Wellenabschnitt des Rotationskörpers oder an einem Achsabschnitt des Stützkörpers erfolgen. Zwischen dem Rotationskörper und dem Stützkörper können auch mehrere Drehlagerungen der erfindungsgemäßen Art angeordnet sein, die je an einem anderen Wellen- oder Achsabschnitt angeordnet sind. Es können auch mehrere Drehlagerungen auf dem gleichen Wellenabschnitt oder Achsabschnitt nebeneinander angeordnet sein, um beispielsweise eine Steifigkeit der Lagerung bzw. Einspannung gegen Biegung zu erhalten oder vergrößern. Wenn vorstehend von Wellen- und Achsabschnitt die Rede ist, so sind die funktionalen Begriffe "Welle" und "Achse" auf die Rotationsbewegung des Rotationskörpers relativ zu dem Stützkörper bezogen, d.h. der lagernde Wellenabschnitt des Rotationskörpers überträgt das Drehmoment für die Rotationsbewegung, während der lagernde Achsabschnitt des Stützkörpers im Falle einer reibungsfreien Drehlagerung kein Drehmoment überträgt.

Der Rotationskörper wird durch die Anordnung von Tragrollen gelagert und zentriert, die je um ihre jeweilige Tragrollen-Rotationsachse drehbar angeordnet sind. Die Tragrollen-Rotationsachsen sind körperfeste Tragachsen des Stützkörpers, der ein ortsfestes Gestell oder durchaus auch ein anderer Rotationskörper oder sonstwie bewegbarer Körper sein kann, oder des Rotationskörpers. Körperfest sind im Sinne der Erfindung auch Tragrollen-Rotationsachsen, die verstellbar sind, wie dies sogar bevorzugt wird, um unvermeidbare Lagerspiele durch eine Verstellung der Position von einer oder der Positionen von mehreren oder allen der Tragrollen-Rotationsachsen auszugleichen. Die Tragrollen-Rotationsachsen können von um die Rotationsachsen jeweils drehbar oder vorzugsweise drehsteif mit dem Stützkörper oder dem Rotationskörper verbundenen Tragzapfen gebildet werden. Für die Lagerung und Zentrierung um die Rotationsachse des Rotationskörpers genügen grundsätzlich drei Tragrollen, vorzugsweise wird der Rotationskörper jedoch von mehr als drei Tragrollen gestützt und drehbar gelagert.

Die Tragrollen wälzen in bevorzugter Ausführung auf einer zu der Rotationsachse des Rotationskörpers rotationssymmetrischen Lauffläche ab. In Abhängigkeit von der Anbindung der Tragrollen an den Rotationskörper oder den Stützkörper ist diese Lauffläche als eine zylindrische Mantelinnenfläche oder eine zylindrische Mantelaußenfläche gebildet.

Die Drehlagerung ist so konzipiert, dass von den Tragrollen jede einzelne wahlfrei von dem sie stützenden Körper, d. h. von dem Rotationskörper oder dem Stützkörper, abmontiert werden kann, der Rotationskörper aber dennoch nach dem Abbau relativ zu dem Stützkörper zentriert gelagert wird. Der Abbau einer Tragrolle, beispielsweise im Falle eines Defekts der Tragrolle oder nach übermäßigem Verschleiß, bewirkt als solcher keine Veränderung der räumlichen Lage der Rotationsachse des Rotationskörpers relativ zu dem Stützkörper.

Um diese für die Wartung und Reparatur der Drehlagerung vorteilhafte Eigenschaft zu erhalten, können Ersatz-Tragrollen in ausreichender Anzahl und geeigneter Anordnung um die Rotationsachse des Rotationskörpers vorgesehen sein, die an die Lauffläche, auf der die Tragrollen abwälzen; anstellbar sind, bevor die betreffende Tragrolle abmontiert wird. So ist es beispielsweise grundsätzlich möglich, den Rotationskörper mittels drei in Wälzkontakt befindlichen Tragrollen in jede zu der Rotationsachse radiale Richtung zu stützen und zentriert zu lagern, wobei jeder der drei Tragrollen eine Ersatz-Tragrolle in unmittelbarer Nähe zugeordnet ist. Weist die Drehlagerung fünf oder noch mehr in Wälzkontakt befindliche Tragrollen auf, wie dies bevorzugt wird, so müsste bereits nicht mehr jeder dieser Tragrollen durch Anordnung in unmittelbarer Nähe eine Ersatz-Tragrolle je einzeln zugeordnet sein, sondern es würden bereits nur zwei diametral einander gegenüberliegende Ersatz-Tragrollen ausreichen, um jede der in Wälzkontakt befindlichen Tragrollen wahlfrei abmontieren zu können.

Vorteilhafterweise wird die Wahlfreiheit bezüglich der Abnehmbarkeit von jeder der in Wälzkontakt befindlichen Tragrollen oder vorzugsweise von gleichzeitig mehreren dieser Tragrollen dadurch erzielt, dass in Wälzkontakt befindliche Tragrollen in einer hierfür ausreichend großen Anzahl und um die Rotationsachse des Rotationskörpers in geeignet gewählten Drehwinkelpositionen vorgesehen sind, so dass jede dieser Tragrollen zumindest allein abmontiert werden kann, der Rotationskörper jedoch auch nach dem Abmontieren von den verbliebenen Tragrollen gestützt und drehbar gelagert wird. Grundsätzlich würden für den Erhalt dieser Eigenschaft drei in Wälzkontakt befindliche Tragrollen genügen, wenn die in diesem Fall im Wälzkontakt nur verbliebenen zwei Tragrollen den Rotationskörper weiterhin zentriert tragen. Dies könnte dadurch erreicht werden, dass die Tragrollen ohne Auflösung des Wälzkontakts um die Rotationsachse verstellbar sind. Vorzugsweise sind jedoch mehr als drei in Wälzkontakt befindliche Tragrollen vorgesehen, noch bevorzugter wenigstens fünf, so dass von jeder der in Wälzkontakt befindlichen Tragrollen jede alleine ohne weiteres abmontiert werden kann. So können bei beispielsweise sieben in Wälzkontakt befindlichen Tragrollen, die um die Rotationsachse gleichmäßig verteilt angeordnet sind, je zwei der Tragrollen wahlfrei abmontiert werden. Die Drehlagerung umfasst daher vorzugsweise wenigstens fünf in Wälzkontakt befindliche Tragrollen, und bevorzugter noch mehr solcher Tragrollen.

Die Tragrollen sind in bevorzugten Ausführungen axial wenigstens einmal, vorzugsweise genau einmal in Tragrollensegmente geteilt. Zum einen kann hierdurch die Montage und Demontage erleichtert werden. Sind die Tragrollensegmente kraftschlüssig miteinander verbunden, vorzugsweise elastisch axial aufeinander zu oder voneinander weg gespannt, beispielsweise mittels einer oder mehrerer Zug- oder Druckfedern, die unmittelbar oder mittelbar an den Segmenten angreifen, können vorteilhafterweise Ungenauigkeiten der Abrollflächen ausgeglichen werden. Die zwischen den Tragrollensegmenten je einer Tragrolle wirkenden Elastizitätskräfte spannen die Segmente vorteilhafterweise auf die Lauffläche, auf der die betreffende Tragrolle abrollt. Die betreffende Tragrolle und die Lauffläche, auf der sie abrollt, weisen einander berührende Oberflächen auf, die so geformt sind, dass die Elastizitätskraft zwischen den Tragrollensegmenten über die Lauffläche wirken kann. Dies ist bei einem konkaven oder konvexen Profil, dass auch aus anderen Gründen bevorzugt wird, der Fall. Die Tragrollensegmente sind zusätzlich zu der kraftschlüssigen Verbindung vorzugsweise auch formschlüssig miteinander verbunden, derart, dass pro geteilter Tragrolle die Segmente relativ zueinander nur entlang der Tragrollenachse bewegbar sind. Hierfür sind pro geteilter Tragrolle die Segmente je mittels wenigstens einem Linearführungselement aneinander geführt, vorzugsweise mittels je wenigstens zwei Linearführungselementen. Das Linearftihrungselement kann von der jeweiligen Tragrolle selbst gebildet werden und/oder einem gesonderten Element, insbesondere, einem Verbindungselement.

Bevorzugte Ausgestaltungen der Erfindung werden in den Unteransprüchen beschrieben.

Soweit in den Ansprüchen von einer axialen Teilung eines Körpers in beispielsweise zwei Axialsegmente gesprochen wird, so sollen die Axialsegmente entlang der Rotationsachse des Rotationskörpers oder entlang einer hierzu parallelen Achse nebeneinander angeordnet sein, d.h. mit axial weisenden Stirnflächen einander zugewandt sein, vorzugsweise aneinander stoßen. Soweit in den Ansprüchen von einer radialen Teilung eines Körpers die Rede ist, so bilden die mehreren Körperteile im Querschnitt je einen Sektor, beispielsweise einen Kreissektor in der Art von Kuchenstücken oder einen Kreisringsektor.

Bevorzugte Ausführungsbeispiele der Erfindung werden nachfolgend anhand von Figuren erläutert.
- Figur 1: eine Drehlagerung mit einem Rotationskörper, der mittels Tragrollen des Rotationskörpers von einem Gestell drehbar gelagert wird,
- Figur 2: eine Drehlagerung mit einem Rotationskörper, der mittels Tragrollen eines Gestells von dem Gestell drehbar gelagert wird,
- Figur 3: eine Drehlagerung mit einem Rotationskörper, der mittels Tragrollen des Rotationskörpers von einem Gestell drehbar gelagert wird,
- Figur 4: eine axial geteilte Tragrolle und
- Figur 5: eine Drehlagerung mit einem Rotationskörper, der mittels Tragrollen des Rotationskörpers von einem Gestell drehbar gelagert wird.

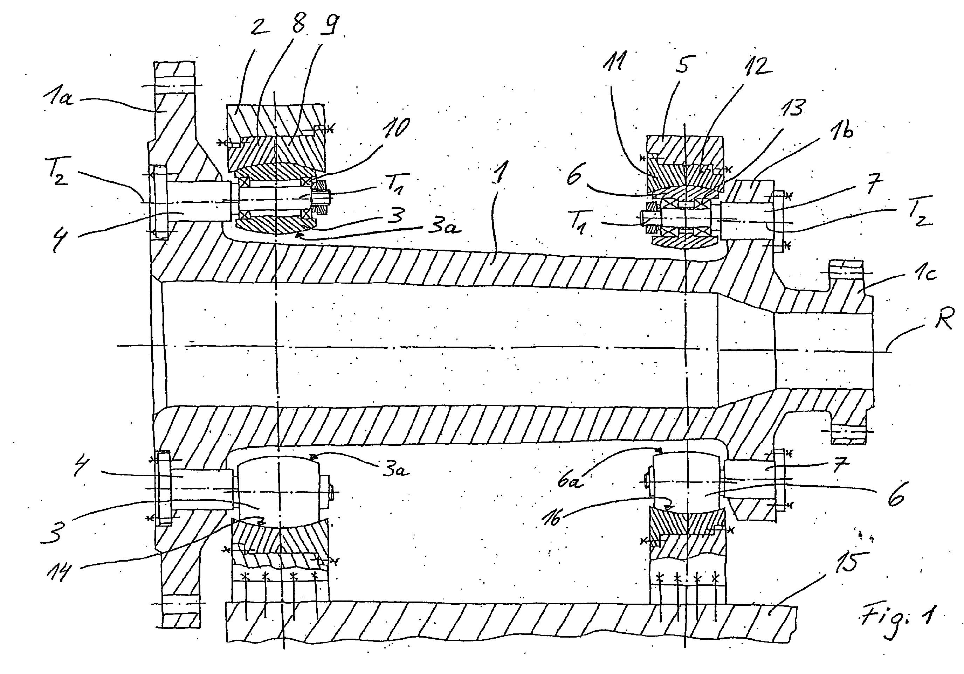

Figur 1 zeigt ein Ausführungsbeispiel einer Drehlagerung, deren Tragrollen mit einer Welle 1 in einem ortsfesten Gestell 2 umlaufen.

Die Welle 1 hat an einem Ende einen Flansch 1a, der über Schraubbolzen mit einer angesetzten Baueinheit - beispielsweise mit der Rotornabe einer Windenergieanlage - verbunden wird.

In Abschnitten des Flansches 1a ist eine Anzahl Tragzapfen 4 fixiert, die an ihrem anderen Ende Abschnitte aufweisen, auf denen Tragrollen 3 drehbar gelagert sind. Die mittels den Tragzapfen 4 gebildeten Rotationsdrehachsen T1 der Tragrollen 3 sind vorzugsweise parallel zu der Längsachse der Welle 1 angeordnet.

Die Welle 1 ist von dem ortsfesten Gestell 2 umschlossen, das der Welle 1 zugewandt eine rotationssymmetrische Lauffläche 14 aufweist.

Die Tragrollen 3 liegen radial um die Welle 1 angeordnet an der Lauffläche 14 an und wälzen bei relativer Rotation zwischen der Welle 1 und dem Gestell 2 auf der Lauffläche 14 ab.

Die axialen und radialen Betriebskräfte, die über den Flansch 1a auf die Welle 1 einwirken, werden von den Tragrollen 3 über die Lauffläche 14 auf das Gestell 2 übertragen. Das Gestell 2 ist mit einer Tragstruktur 15 fest verbunden.

Die Lagerung der Tragrollen 3 auf den Tragachsen 4 geschieht vorzugsweise durch eine Anordnung von Wälzlagern 10, die geeignet ist, die auftretenden Kräfte zu übertragen. Dieses kann beispielsweise eine Lagerung mit vorgespannten Kegelrollenlagern in O-Anordnung sein.

Die Lauffläche 14 des Gestells 2 und die Mantelfläche 3a der Tragrollen 3 weisen vorzugsweise ein in ihrer Kontaktzone annähernd kongruentes Profil auf, in diesem Ausführungsbeispiel einen Kreisbogen. Die Lauffläche 14 ist als Abschnitt einer hohlkugel ausgebildet. Der Kreisbogenradius des Längsprofils der Mantelfläche 3a ist etwas kleiner als der Kreisbogenradius der Lauffläche 14, so dass unter Einwirken einer Betriebslast in ihrer Kontaktzone ein Anschmiegen der Tragrollen 3 an die Lauffläche 14 erfolgt.

Die Tragrollen 3 sind derart zu der Welle 1 ausgerichtet, dass die Kreismittelpunkte ihrer unter Betriebslast in der Kontaktzone geformten Bogenprofile in einem gemeinsamen Punkt auf der Drehachse der Welle 1 zusammenfallen. Aus dieser Anordnung und durch die Ausgestaltung der Kontaktzonen von Laufbahn 14 und Tragrollen 3 wird eine winklige Verlagerung zwischen Welle 1 und Gestell 2 um einen gemeinsamen Punkt auf der Drehachse der Welle 1 ermöglicht. Durch eine solche Verlagerung wird einem Verklemmen der Tragrollen 3 in der Lauffläche 14 des Gestells 2 vorgebeugt, wenn sich die Welle 1 unter dem Einfluss einer Betriebslast verbiegt.

Die Welle 1 weist einen weiteren Flansch 1b auf, der wiederum über Tragzapfen 7 eine Anzahl Tragrollen 6 trägt. Diese wälzen auf der Lauffläche 16 eines zweiten ortsfesten, mit der Tragstruktur 15 fest verbundenen Gestells 5 ab. Die Form der Lauffläche 16 und der Tragrollen 6 entspricht der bereits beschriebenen Art, so dass auch in dieser Lagerstelle eine winklige Verstellbarkeit der Welle 1 relativ zu dem Gestell 5 gegeben ist. Die Verstellbarkeit der beiden Lagerstellen ermöglicht es auch, Fluchtungsfehler, die aus der Positionierung der Gestelle 2 und 5 resultieren, auszugleichen.

Die Lagerung der Tragrollen 6 auf den Tragzapfen 7 erfolgt vorzugsweise durch Wälzlager 13, die eine axiale Verschiebung der Tragrollen 6 auf den Tragzapfen 7 zulassen. Dieses kann beispielsweise durch eine Lagerung mit Zylinderrollenlagern mit bordlosen Innenringen erreicht werden. Auf diese Weise ist die freie axiale Ausdehnbarkeit der Welle 1 sichergestellt, die Lagerung durch die Tragrollen 6 und das Gestell 5 stützt die Welle 1 nur gegen radiale Kräfte ab und wirkt so als Drehmomentstütze der gesamten Wellenlagerung.

Die Tragzapfen 4 und 7 sind verstellbar, um die Tragrollen-Rotationsachsen T1 verstellen zu können. Jede der Rotationsachsen T1 und somit jede der Tragrollen 3 und 6 ist individuell verstellbar. Durch die Verstellung wird der radiale Abstand der Rotationsachse T1 zur Rotationsachse R verändert. Der Abstand ist kontinuierlich, d. h. stufenlos verstellbar. Die Rotationsachsen T1 sind in jeder Verstellposition fixierbar. Für die Verstellbarkeit weisen die Tragzapfen 4 und 7 je eine Exzentrizität zwischen den Abschnitten zum Einbau in den Flanschen 1a und 1b und den Abschnitten zur Lagerung der Tragrollen 3 und 6 auf. Durch diese Ausgestaltung ist es möglich, den radialen Abstand der Drehachsen der Tragrollen 3 und 6 zu der Drehachse der Welle 1 zu verändern. Die Tragzapfen 4 und 7 sind je um eine eigene Zapfenachse T2 drehbar gelagert. Die Zapfenachse T2 ist bei jedem der Tragzapfen 4 und 7 exzentrisch zu der Tragrollen-Rotationsachse T1. Der Abstand zwischen den Tragrollen 3 und 6 und den Laufflächen 14 und 16, d. h. die Lagerluft, kann für jede der Tragrollen 3 und 6 eingestellt werden, wodurch sich der Verschleiß sowie Fertigungstoleranzen der Bauteile in gewissen Grenzen ausgleichen lassen.

Die Laufflächen 14 und 16 der Gestelle 2 und 5 werden durch vorzugsweise mehrfach radial geteilte Lagerringe 8, 9 und 11, 12 gebildet, welche in Richtung der Mittelachsen der Laufflächen 14 und 16 hintereinander angeordnet, d. h. axial geteilt, sind. Sie sind mit den Gestellen 2 und 5 fest verbunden. Durch diese Ausgestaltung können erst die äußeren Lagerringe 8 und 12, dann die Tragrollen 3 und 6 und schließlich die inneren Lagerringe 9 und 11 von dem Bereich aus, der zwischen den Gestellen 2 und 5 liegt, montiert werden. Dieser Aufbau ermöglicht es, die Wälzpartner auszutauschen oder zu überholen, ohne die Welle 1 aus dem Bauteilverbund lösen zu müssen, wodurch sich je nach Anwendungsfall erhebliche Zeit- und Kostenvorteile ergeben.

In ihrem weiteren Verlauf weist die Welle 1 einen dritten Flansch 1c auf, der über Schraubenbolzen mit einer weiteren Baueinheit - beispielsweise einem elektrischen Generator - verbunden wird.

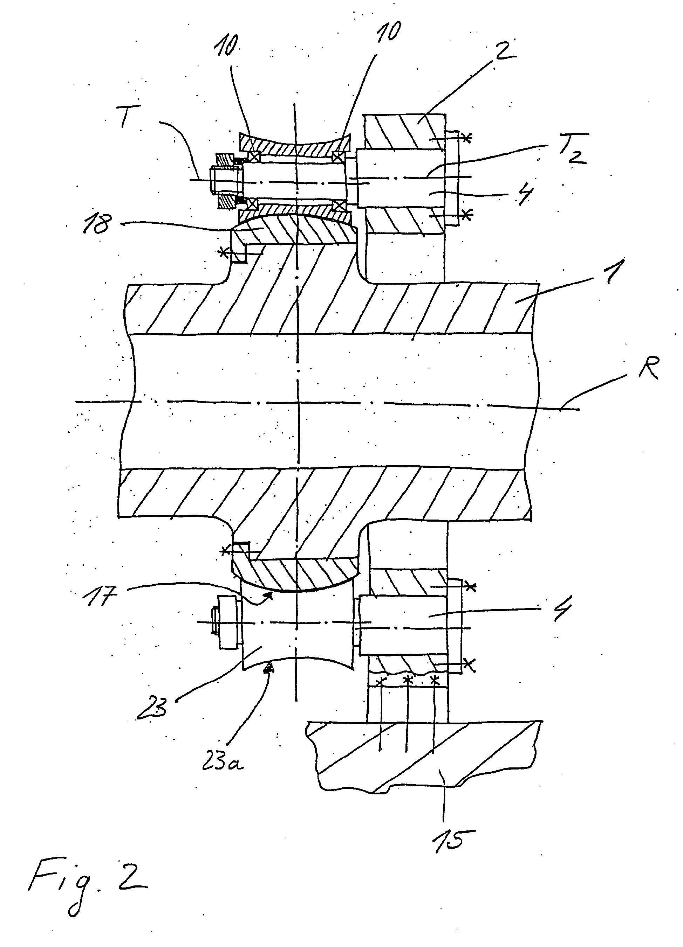

Fig. 2 zeigt ein Ausführungsbeispiel einer Drehlagerung, bei der die Tragrollen ortsfest an einem Gestell gelagert sind.

Die Welle 1 ist so ausgebildet, dass sie auf ihrem Umfang eine Lauffläche 17 aufweist. Auf dieser wälzen Tragrollen 23 ab, welche drehbar auf Abschnitten von Tragzapfen 4 gelagert sind. Die Tragzapfen 4 sind in einem ortsfesten Gestell 2 fixiert, welches die Welle 1 umschließt. Das Gestell 2 ist mit einer Tragstruktur 15 fest verbunden.

Die auf die Welle 1 einwirkenden Betriebskräfte werden über die Lauffläche 17, die Tragrollen 23 und die Tragzapfen 4 auf das Gestell 2 übertragen. Die Tragrollen 23 sind mit Wälzlagern 10 auf den Tragzapfen 4 gelagert. Wie auch in dem anhand Fig. 1 beschriebenen Ausführungsbeispiel ist durch die Art der Wälzlagerung bestimmt, ob neben den radialen Kräften auch axiale Kräfte übertragen werden können. In dem dargestellten Fall ist eine Lagerung mit beispielsweise Kegelrollenlagern in O-Anordnung ausgeführt, so dass sowohl axiale als auch radiale Kräfte von der Welle 1 auf das Gestell 2 übertragen werden können.

Die Lauffläche, 17 hat die Form eines Kugelabschnitts, dessen Mittelpunkt auf der Rotationsachse R der Welle 1 liegt. Wie im Ausführungsbeispiel der Fig. 1 weist das Profil der Mantelflächen 23a der Tragrollen 23 vorzugsweise einen zur Form der Lauffläche 17 annähernd kongruente Bogen auf. Die Tragrollen 23 sind in dem Gestell 2 derart angeordnet, dass die Kreisbogenmittelpunkte der in der Kontaktzone unter Betriebslast geformten Längsprofile ihrer Mantelflächen 23a in einem gemeinsamen Punkt zusammenfallen. Hieraus ergibt sich wiederum die Möglichkeit einer winkligen Verlagerung zwischen Welle 1 und Gestell 2, wodurch ein Verklemmen in der Lagerstelle durch ein Verbiegen der Welle 1 oder durch eine last- oder montagebedingte Schiefstellung der Welle 1 im Gestell 2 verhindert wird.

Die Lauffläche 17 wird durch einen radial mehrfach geteilten Lagerring 18 gebildet, welcher fest mit der Welle 1 verbunden ist. Die Teilung des Lagerringes 18 ist vorteilhaft, um die Lagerstelle montieren und demontieren zu können. Wie auch im Ausführungsbeispiel nach Fig. 1 weisen die Tragzapfen 4 vorzugsweise eine Exzentrizität zwischen den Abschnitten, mit denen sie im Gestell 2 fixiert sind, und den Abschnitten, die zur Lagerung der Tragrollen 23 dienen, auf. Dadurch lassen sich auch hier Verschleiß und Fertigungstoleranzen der Bauteile ausgleichen.

Um eine einfachere Montage der Lagerung zu erreichen, können die Tragrollen 23 mindestens einfach axial geteilt ausgebildet werden. Versieht man eine Welle mit zwei der hier beschriebenen Lagerstellen, ist es - wie im Beispiel nach Fig. 1 - möglich, ein auf die Welle einwirkendes Moment abzustützen sowie Fluchtungsfehler zwischen den Lagerstellen auszugleichen.

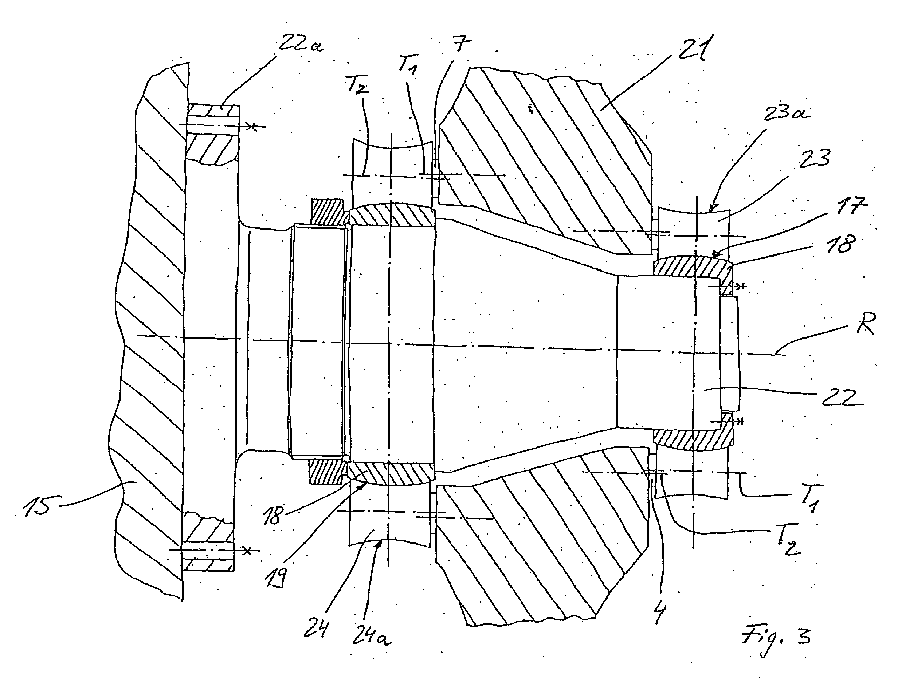

Fig. 3 stellt ein Ausführungsbeispiel einer Lagerung eines auf einer Rotationsachse R umlaufenden Bauteils 21 dar.

Ein Achszapfen 22 hat einen Flansch 22a, mit dem er an einer Tragstruktur 15 unbeweglich befestigt ist. Er weist in seiner Längserstreckung an seinem Umfang zwei rotationssymmetrische Laufflächen 17 und 19 auf, welche die Form von Kugelabschnitten haben, deren Mittelpunkte auf der Rotationsachse R des Achszapfens 22 liegen. Die Ausgestaltung der Tragrollen 23, 24 und Laufflächen 17 und 19 entspricht dem in Fig. 2 beschriebenen Prinzip, weswegen an dieser Stelle nicht weiter darauf eingegangen wird.

Die Tragzapfen 4 und 7 der Tragrollen 23 und 24 sind an dem umlaufenden Bauteil 21 derart angeordnet, dass die Kreisbogenmittelpunkte der in der Kontaktzone unter Betriebslast geformten Längsprofile ihrer Mantelflächen 23a und 24a für jede der beiden Lagerstellen in einem gemeinsamen Punkt zusammenfallen. Hieraus ergibt sich, dass sich das umlaufende Bauteil 21 in den Lagerstellen winklig zu dem Achszapfen 22 verlagern kann, so dass ein Verklemmen der Lagerstellen durch eine Verformung von umlaufendem Bauteil 21 oder Achse 22 verhindert wird. Durch die Winkeleinstellbarkeit der Lagerstellen können gleichzeitig Fluchtungsfehler des Zusammenbaus ausgeglichen werden.

Die Lagerung der Tragrollen 23 und 24 erfolgt wie im Ausführungsbeispiel nach Fig. 1 vorzugsweise mit Wälzlagern, wobei die Art und Anordnung der Lager vorzugsweise so gewählt wird, dass eine der Lagerstellen axiale und radiale Kräfte und die andere Lagerstelle nur radiale Kräfte überträgt. Die Aufnahme von Momenten, welche auf das umlaufende Bauteil 21 einwirken, wird durch den räumlichen Abstand der Lagerstellen ermöglicht.

Die Laufflächen 17 und 19 werden durch radial mehrfach geteilte Lagerringe 18 gebildet, welche fest mit dem Achszapfen 22 verbunden sind. Die Teilung der Lagerringe 18, 20 ist nötig, um die Lagerstellen montieren und demontieren zu können.

Wie auch in den Ausführungsbeispielen nach Fig. 1 und Fig. 2 weisen die Tragzapfen 4, 7 vorzugsweise eine Exzentrizität auf zwischen den Abschnitten, mit denen sie im umlaufenden Bauteil 21 fixiert sind, und den Abschnitten, die zur Lagerung der Tragrollen 23 und 24 dienen. Dadurch lassen sich auch hier Verschleiß und Fertigungstoleranzen der Bauteile ausgleichen.

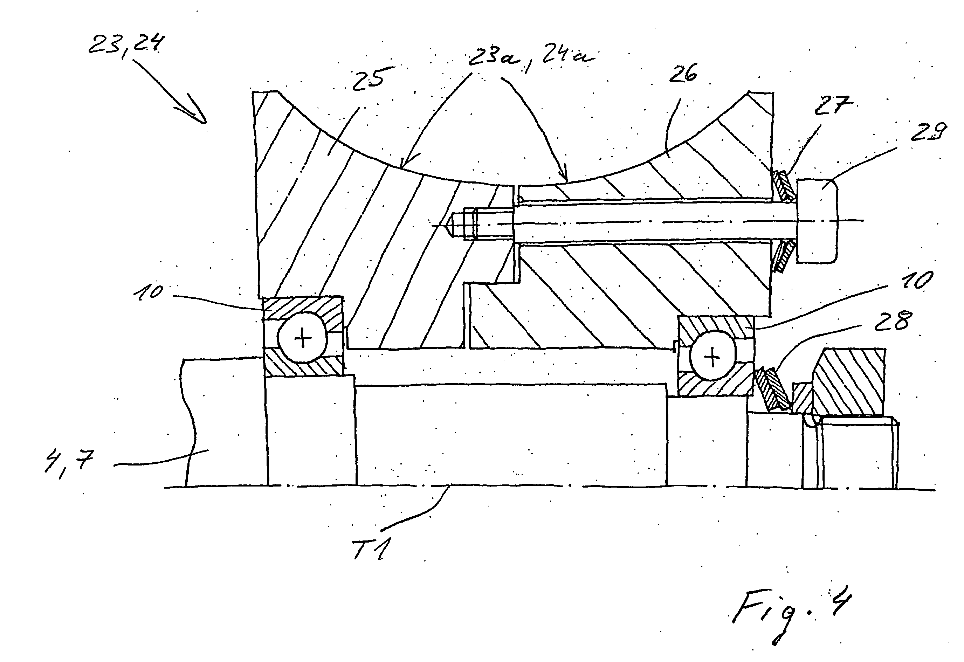

Figur 4 zeigt eine axial geteilte Tragrolle, wobei als Beispiel eine Tragrolle 23 oder 24 nach einem der Ausführungsbeispiele gemäß den Figuren 2 und 3 dargestellt ist. Die Tragrolle 23 oder 24 ist axial in zwei Tragrollensegmente 25 und 26 geteilt, die zusammen die Lauffläche 23a oder 24a bilden. In der Lauffläche 23a oder 24a verläuft die Trennung zwischen den Segmenten 25 und 26 so, dass die von den Segmenten 25 und 26 gemeinsam gebildete Lauffläche 23a oder 24a an der Stelle geteilt ist, die von der Rotationsachse R des Rotationskörpers den kleinsten Abstand hat.

Die Segmente 25 und 26 sind kraft- und formschlüssig miteinander verbunden. Als Verbindungselemente 29 dienen Schaftschrauben, die pro Tragrolle 23 oder 24 um deren Rotationsachse T1 gleichmäßig verteilt angeordnet sind. Jedes der Verbindungselemente 29 durchragt axial das Segment 26 und ist mit dem Segment 25 fest verbunden, im Ausführungsbeispiel verschraubt. Die Verbindungselemente 29 erstrecken sich in dem Segment 26 je über die Länge ihres glatten Schaftbereichs, so dass sie je ein Linearführungselement bilden, das das Segment 25 axial linear an dem Segment 26 führt. Eine weitere axiale Linearführung entsteht durch die treppenförmige Trennfläche mit axial erstreckten Führungsflächen zwischen dem Segment 25 und dem Segment 26.

Die Verbindungselemente 29 drücken über Federelemente 27, im Ausführungsbeispiel Tellerfedern, die Segmente 25 und 26 axial gegeneinander, so dass im Ergebnis ein Kraftschluss erhalten wird. Grundsätzlich wäre es auch möglich, die Federelemente 27 wegzulassen. Der Effekt der selbstjustierenden Nachstellung durch die axiale Teilung der Tragrollen 23 und 24 kann auch allein durch die axiale Elastizität der Verbindungselemente 29 oder anderer geeigneter Verbindungselemente erzielt werden.

Die Lager 10 der Tragrollen 23 oder 24 sind auf dem jeweiligen Tragzapfen 4 oder 7 in Achsrichtung elastisch gespannt mittels weiterer Federelemente 28, die im Ausführungsbeispiel ebenfalls als Tellerfedern gebildet sind. Die Lager 10 können somit bei Axialbewegungen zwischen den Segmenten 25 und 26 elastisch nachgeben.

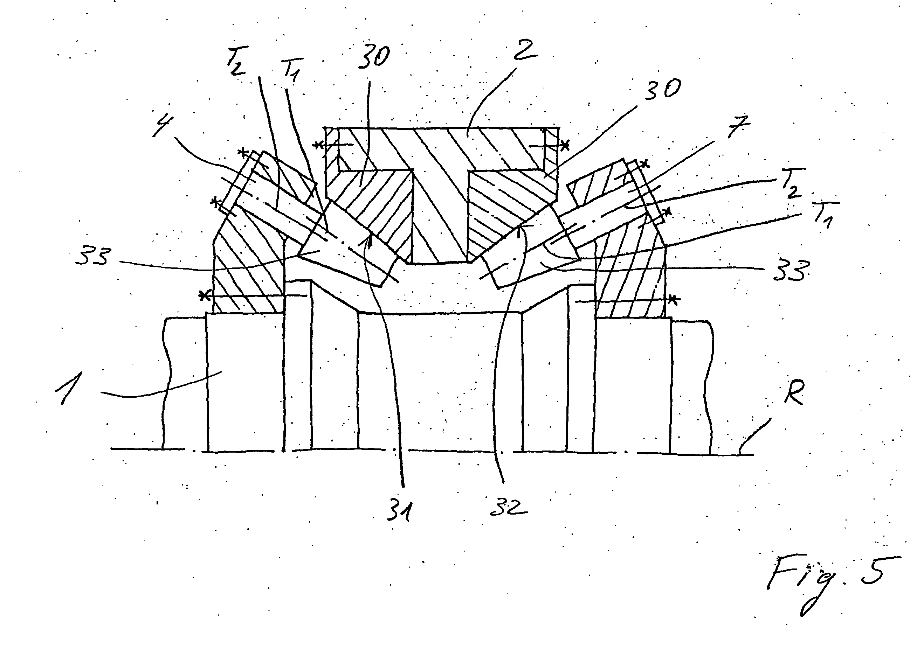

Figur 5 zeigt als weiteres Beispiel einer erfindungsgemäßen Drehlagerung ein Kegekollenlager mit zwei Sätzen von Tragrollen 33, von denen ein erster Satz an einer Lauffläche 31 und der zweite Satz an einer Lauffläche 32 abwälzt. Die Tragrollen 33 sind als Kegelrollen gebildet und je drehbar auf Tragrollen-Rotationsachsen T1 gelagert, vorzugsweise so wie anhand der anderen Ausführungsbeispiele erläutert. Die Tragrollen-Rotationsachsen T1 werden pro Tragrolle 33 von einem Tragzapfen 4 oder 7 gebildet entsprechend den Tragzapfen der anderen Ausführungsbeispiele. Die Tragrollen-Rotationsachsen T1 weisen unter einem ersten Winkel schräg zueinander und je unter einem zweiten Winkel schräg zu der Rotationsachse R. Der zweite Winkel ist bei beiden Rotationsachsen T1 vorzugsweise der gleiche. Die Tragzapfen 4 und 7 sind in von dem Rotationskörper 1 radial abragenden Flanschen je um eine Verstellachse T2 drehverstellbar und in jeder Verdrehposition fixierbar gelagert. Die Tragrollen-Rotationsachsen T1 und die Verstellachsen T2 verlaufen pro Tragzapfen 4 und 7 exzentrisch parallel zueinander. Die Laufflächen 31 und 32 werden je von einem Lagerkörper 30 gebildet, der an dem Gestell 2 befestigt ist. Die Laufflächen 31 und 32 sind ebene Kegelinnenflächen.

Als Kegelrollenlager gebildete Drehlagerungen mit wenigstens zwei Kegelrollenlager mit wenigstens zwei Laufflächen, die gegeneinander angestellt sind, wie dies beispielsweise anhand des Ausführungsbeispiels der Figur 5 dargestellt ist, können vorteilhafterweise in axialer Richtung sehr kurz bauen. Sie erlauben des Weiteren auch ein sehr einfaches Nachspannen, indem die Kegelrollen, beispielsweise die Kegelrollen 33 des Ausführungsbeispiels, entlang ihrer jeweiligen Tragrollen-Rotationsachse T1 linear verstellbar gelagert werden. Bei auftretendem Spiel aufgrund Verschleiß müssen derart gelagerte Kegelrollen 33 lediglich entlang ihrer Rotationsachsen T1 weiter in ihre Lauffläche, beispielsweise die Lauffläche 31 und/oder 32, hineingeschoben werden. Dies kann durchaus individuell pro Kegelrolle 33 vorgenommen werden. Die lineare Verstellung ist eine Alternative zu der Exzenterverstellung. Gegebenenfalls können auch beide Verstelhnöglichkeiten einander ergänzend vorgesehen sein. Ein Verstellmechanismus, der die Möglichkeit bietet, die Tragrollen, beispielsweise die Kegelrollen 33, von der zugeordneten Lauffläche, beispielsweise 31 oder 32, abzustellen, wird allerdings bevorzugt, da hierdurch der Austausch der betreffenden Tragrolle erleichtert wird. Für ein einfaches Nachspannen hat die Linearverschiebbarkeit allerdings auch ihre Vorteile.

## Patentansprüche

1. Drehlagerung eines Rotationskörpers, die Drehlagerung umfassend:
a) den Rotationskörper (1; 21),
b) einen Stützkörper (2; 22), der den Rotationskörper (1; 21) auf einer Rotationsachse (R) stützt,
c) und Tragrollen (3, 6; 23; 24; 33), die den Rotationskörper (1; 21) relativ zu dem Stützkörper (2; 22) um die Rotationsachse (R) durch Wälzkontakt mit einer Lauffläche (14, 16; 17; 17, 19; 31, 32) drehbar lagern,
d) wobei die Tragrollen (3, 6; 23; 24; 33) um Tragrollen-Rotationsachsen (T1) die der Rotationskörper (1; 21) oder der Stützkörper (2; 22) bildet, einzeln abgestützt drehbar gelagert sind,
**dadurch gekennzeichnet, dass**
e) die Tragrollen (3, 6; 23; 24; 33) in solch einer Anzahl vorgesehen und so um die Rotationsachse (R) des Rotationskörpers (1; 21) angeordnet sind, dass jede der Tragrollen (3, 6; 23; 24; 33) wahlfrei einzeln von dem Rotationskörper (1; 21) oder dem Stützkörper (2; 22) abnehmbar ist und die nach der Abnahme noch verbliebenen Tragrollen (3, 6; 23; 24; 33) den Rotationskörper (1; 21) in jede zu der Rotationsachse radiale Richtung stützen und zentriert drehbar lagern,
f) und ein Verstellmechanismus vorgesehen ist, mit dem die Tragrollen (3, 6; 23; 24; 33) für das Abnehmen von der Lauffläche (14, 16; 17; 17, 19; 31, 32) abstellbar sind.

2. Drehlagerung nach Anspruch 1, **dadurch gekennzeichnet,**
**dass** der Rotationskörper (1; 21) einen ersten Körper und der Stützkörper (2; 22) einen zweiten Körper bildet,
**dass** die Tragrollen-Rotationsachsen (T1) körperfeste Achsen oder verstell- und festlegbare Achsen des einen dieser Körper sind
und **dass** der andere dieser Körper mit der Lauffläche (14, 16; 17; 17, 19; 31, 32) um die Rotationsachse (R) des Rotationskörpers (1; 21) versehen ist, auf der die Tragrollen (3, 6; 23; 24; 33) abwälzen.

3. Drehlagerung nach dem vorhergehenden Anspruch, **dadurch gekennzeichnet, dass** der Rotationskörper (1; 21) oder der Stützkörper (2; 22) die Lauffläche (14, 16; 17; 17, 19; 31, 32) als eine von den Tragrollen (3, 6; 23; 24; 33) umgebene Mantelaußenfläche (17; 17, 19) oder eine die Tragrollen umgebende Mantelinnenfläche (14, 16; 31, 32) bildet.

4. Drehlagerung nach einem der vorhergehenden Ansprüche, **dadurch gekennzeichnet, dass** ein Lagerkörper (8, 9, 11, 12; 18; 30), der mit dem Rotationskörper (1; 21) oder dem Stützkörper (2; 22) verdrehgesichert und vorzugsweise lösbar verbunden ist, die Lauffläche (14, 16; 17; 17, 19; 31, 32) oder einen Teil der Lauffläche bildet.

5. Drehlagerung nach dem vorhergehenden Anspruch, **dadurch gekennzeichnet, dass** der Lagerkörper (8, 9, 11, 12; 18; 30) radial in wenigstens zwei Lagerkörper-Sektoren geteilt ist, die verdrehgesichert, aber lösbar miteinander oder vorzugsweise je einzeln entweder mit dem Rotationskörper (1; 21) oder dem Stützkörper (2; 22) verbunden sind, wobei die Lagerkörper-Sektoren je einen Teil der Lauffläche (14, 16; 17; 17, 19; 31, 32) bilden, der sich in Umfangsrichtung um die Rotationsachse (R) des Rotationskörpers (1; 21) höchstens über einen Winkel von 180° erstreckt.

6. Drehlagerung nach einem der zwei vorhergehenden Ansprüche, **dadurch gekennzeichnet, dass** der Lagerkörper (8; 9, 11, 12), in Bezug auf die Rotationsachse (R) des Rotationskörpers (1; 21) axial wenigstens in zwei, vorzugsweise genau in zwei, Lagerkörper-Axialsegmente geteilt ist, die miteinander oder vorzugsweise je einzeln mit dem Rotationskörper (1; 21) oder dem Stützkörper (2; 22) verdrehgesichert, aber lösbar verbunden sind.

7. Drehlagerung nach dem vorhergehenden Anspruch, **dadurch gekennzeichnet, dass** die Lagerkörper-Axialsegmente in einer radial zu der Rotationsachse (R) weisenden Ebene aneinander stoßen, in der die Lauffläche (14, 16) einen größten oder einen kleinsten radialen Abstand von der Rotationsachse (R) aufweist.

8. Drehlagerung nach einem der Ansprüche 4-7, **dadurch gekennzeichnet, dass** der Lagerkörper (8, 9, 11, 12; 18; 30) ein Ringkörper ist.

9. Drehlagerung nach einem der Ansprüche 2 bis 8, **dadurch gekennzeichnet, dass** die Lauffläche (14, 16; 17; 17, 19) zu der Rotationsachse (R) des Rotationskörpers (1; 21) konkav, vorzugsweise ballig, ist.

10. Drehlagerung nach dem vorhergehenden Anspruch, **dadurch gekennzeichnet, dass** die Lauffläche (14, 16; 17; 17, 19) in axialer Richtung beidseitig auf die Rotationsachse (R) zu gekrümmt ist.

11. Drehlagerung nach einem der Ansprüche 2 bis 8, **dadurch gekennzeichnet, dass** die Lauffläche zu der Rotationsachse (R) des Rotationskörpers (1; 21) konvex ist.

12. Drehlagerung nach dem vorhergehenden Anspruch, **dadurch gekennzeichnet, dass** die Lauffläche in axialer Richtung beidseitig von der Rotationsachse (R) weg gekrümmt ist.

13. Drehlagerung nach einem der Ansprüche 2 bis 12, **dadurch gekennzeichnet, dass** die Lauffläche (14, 16; 17; 17, 19) ein zu der Rotationsachse (R) des Rotationskörpers (1; 21) konzentrischer Ringabschnitt einer Kugeloberfläche oder Streifen einer Torusoberfläche ist.

14. Drehlagerung nach einem der Ansprüche 2 bis 13 **dadurch gekennzeichnet, dass** die Lauffläche (14, 16; 17; 17, 19) und die auf der Lauffläche abwälzenden Wälzflächen der Tragrollen (3, 6; 23; 24) aneinander angeschmiegt geformt sind.

15. Drehlagerung nach dem vorhergehenden Anspruch, **dadurch gekennzeichnet, dass** entweder die Lauffläche (14, 16; 17; 17, 19) den Ringabschnitt oder Torusstreifen gemäß Anspruch 13 bildet oder die Wälzflächen der Tragrollen (3, 6; 23; 24) in axialer Richtung je einen Kreisbogen bilden.

16. Drehlagerung nach einem der vorhergehenden Ansprüche, **dadurch gekennzeichnet, dass** die Tragrollen (3, 6; 23; 24; 33) einteilig oder je wenigstens einmal, vorzugsweise genau einmal, axial in Tragrollensegmente (25, 26) geteilt sind.

17. Drehlagerung nach dem vorhergehenden Anspruch, **dadurch gekennzeichnet, dass** die Tragrollensegmente (25, 26) wenigstens einer, vorzugsweise mehrerer und besonders bevorzugt sämtlicher Tragrollen (3, 6; 23; 24; 33) relativ zueinander axial beweglich kraftschlüssig und vorzugsweise auch formschlüssig miteinander verbunden sind.

18. Drehlagerung nach einem der vorhergehenden Ansprüche, **dadurch gekennzeichnet, dass** mehrere der Tragrollen (3, 6; 23; 24; 33) von dem Rotationskörper (1; 21) oder dem Stützkörper (2; 22) abnehmbar sind und die verbliebenen Tragrollen (3, 6; 23; 24; 33) den Rotationskörper stützen und zwischen sich zentriert drehbar lagern.

19. Drehlagerung nach einem der vorhergehenden Ansprüche, **dadurch gekennzeichnet, dass** die Tragrollen (3, 6; 23; 24; 33) auf von dem Rotationskörper (1; 21) oder dem Stützkörper (2; 22) abragenden Tragzapfen (4, 7) drehbar gelagert sind oder mit Tragzapfen verdrehgesichert verbunden oder in einem Stück gebildet sind, die von dem Rotationskörper oder dem Stützkörper drehbar gelagert werden.

20. Drehlagerung nach dem vorhergehenden Anspruch, **dadurch gekennzeichnet, dass** wenigstens eine der Tragrollen (3, 6; 23; 24; 33) axial verschiebegesichert gelagert ist, vorzugsweise auf ihrem Tragzapfen (4, 7).

21. Drehlagerung nach einem der vorhergehenden Ansprüche, **dadurch gekennzeichnet, dass** die Tragrollen-Tragachsen (T1) relativ zu dem sie bildenden Rotationskörper (1; 21) oder Stützkörper (2; 22) verstellbar sind, vorzugsweise parallel zu der Rotationsachse (R) des Rotationskörpers (1; 21), und in unterschiedlichen Verstellpositionen fixierbar sind, um einen radialen Abstand der Tragachsen (T1) zu der Rotationsachse (R) des Rotationskörpers (1; 21) verstellen zu können.

22. Drehlagerung nach dem vorhergehenden Anspruch, **dadurch gekennzeichnet, dass** die Tragzapfen (4, 7) Exzentertragzapfen (4, 7) sind, von denen jeder um eine Zapfenachse (T2) verdrehbar mit dem Rotationskörper (1; 21) oder dem Stützkörper (2; 22) verbunden ist und je eine der Tragrollen-Rotationsachsen (T1) parallel beabstandet zu seiner Zapfenachse (T2) bildet.

23. Drehlagerung nach einem der Ansprüche 1 bis 8 oder 16 bis 22, **dadurch gekennzeichnet, dass** die Drehlagerung ein Kegelrollenlager ist oder umfasst.

24. Drehlagerung nach dem vorhergehenden Anspruch, **dadurch gekennzeichnet, dass** die als Kegelrollen (33) gebildeten Tragrollen entlang den Tragrollen-Rotationsachsen (T1) axial verstellbar und in Verstellpositionen fixierbar gelagert sind.

25. Drehlagerung nach einem der zwei vorhergehenden Ansprüche, **dadurch gekennzeichnet, dass** die Tragrollen (33) an einer kegelförmigen Lauffläche (31, 32) abwälzen, die schräg zu der Rotationsachse (R) des Rotationskörpers (1) weist.

26. System für die Erzeugung von Energie, vorzugsweise Windkraftanlage, das einen von Fremdenergie angetriebenen Rotor, vorzugsweise ein Windrad, aufweist, dessen Drehlagerung eine Drehlagerung nach einem der vorhergehenden Ansprüche ist.

## Claims

1. A rotational bearing of a rotational body, said rotational bearing comprising:
a) the rotational body (1; 21);
b) a support body (2; 22) which supports the rotational body (1; 21) on a rotational axis (R);
c) and carrier rollers (3, 6; 23; 24; 33) which mount the rotational body (1; 21) such that it can rotate about the rotational axis (R) relative to the support body (2; 22), by rolling contact with a running surface (14, 16; 17; 17, 19; 31, 32),
d) wherein the carrier rollers (3, 6; 23; 24; 33) are mounted, individually supported, such that they can rotate about carrier roller rotational axes (T1) formed by the rotational body (1; 21) or the support body (2; 22);
**characterised in that**:
e) the carrier rollers (3, 6; 23; 24; 33) are provided in sufficient numbers and arranged about the rotational axis (R) of the rotational body (1; 21) such that each of the carrier rollers (3, 6; 23; 24; 33) can be optionally and individually removed from the rotational body (1; 21) or the support body (2; 22), and the carrier rollers (3, 6; 23; 24; 33) which still remain after this removal support the rotational body (1; 21) in any radial direction with respect to its rotational axis and mount it such that it can be rotated, centred;
f) and an adjusting mechanism is provided, using which the carrier rollers (3, 6; 23; 24; 33) can be detached from the running surface (14, 16; 17; 17, 19; 31, 32) in order to be removed.

2. The rotational bearing according to claim 1, **characterised in that**:
the rotational body (1; 21) forms a first body, and the support body (2; 22) forms a second body;
the carrier roller rotational axes (T1) are secured axes or adjustable and fixable axes of one of said bodies;
and the other of said bodies is provided with the running surface (14, 16; 17; 17, 19; 31, 32) about the rotational axis (R) of the rotational body (1; 21), the carrier rollers (3, 6; 23; 24; 33) rolling off on said running surface (14, 16; 17; 17, 19; 31, 32).

3. The rotational bearing according to the preceding claim, **characterised in that** the rotational body (1; 21) or the support body (2; 22) forms the running surface (14, 16; 17; 17, 19; 31, 32) as a shell outer surface (17; 17, 19) surrounded by the carrier rollers (3, 6; 23; 24; 33) or a shell inner surface (14, 16; 31, 32) surrounding the carrier rollers.

4. The rotational bearing according to any one of the preceding claims, **characterised in that** a bearing body (8, 9, 11, 12; 18; 30) which is connected to the rotational body (1; 21) or the support body (2; 22), rotationally secured and preferably detachable, forms the running surface (14, 16; 17; 17, 19; 31, 32) or a part of the running surface.

5. The rotational bearing according to the preceding claim, **characterised in that** the bearing body (8, 9, 11, 12; 18; 30) is radially divided into at least two bearing body sectors which are connected, rotationally secured but detachable, to each other or preferably each individually either to the rotational body (1; 21) or the support body (2; 22), wherein the bearing body sectors each form a part of the running surface (14, 16; 17; 17, 19; 31, 32) extending in the circumferential direction about the rotational axis (R) of the rotational body (1; 21) at most over an angle of 180°.

6. The rotational bearing according to any one of the preceding two claims, **characterised in that** the bearing body (8, 9, 11, 12) is axially divided into at least two, preferably into exactly two bearing body axial segments with respect to the rotational axis (R) of the rotational body (1; 21), said bearing body axial segments being connected, rotationally secured but detachable, to each other or preferably each individually to the rotational body (1; 21) or the support body (2; 22).

7. The rotational bearing according to the preceding claim, **characterised in that** the bearing body axial segments abut each other in a plane pointing radially with respect to the rotational axis (R), in which the running surface (14, 16) exhibits a greatest or a smallest radial distance from the rotational axis (R).

8. The rotational bearing according to any one of claims 4 to 7, **characterised in that** the bearing body (8, 9, 11, 12; 18; 30) is an annular body.

9. The rotational bearing according to any one of claims 2 to 8, **characterised in that** the running surface (14, 16; 17; 17, 19) is concave, preferably spherical, with respect to the rotational axis (R) of the rotational body (1; 21).

10. The rotational bearing according to the preceding claim, **characterised in that** the running surface (14, 16; 17; 17, 19) is curved in the axial direction towards the rotational axis (R) on both sides.

11. The rotational bearing according to any one of claims 2 to 8, **characterised in that** the running surface is convex with respect to the rotational axis (R) of the rotational body (1; 21).

12. The rotational bearing according to the preceding claim, **characterised in that** the running surface is curved in the axial direction away from the rotational axis (R) on both sides.

13. The rotational bearing according to any one of claims 2 to 12, **characterised in that** the running surface (14, 16; 17; 17, 19) is an annular section of a spherical surface or strip of a toroidal surface which is concentric with respect to the rotational axis (R) of the rotational body (1; 21).

14. The rotational bearing according to any one of claims 2 to 13, **characterised in that** the running surface (14, 16; 17; 17, 19) and the rolling surfaces of the carrier rollers (3, 6; 23; 24) which roll off on the running surface are shaped to conform to each other.

15. The rotational bearing according to the preceding claim, **characterised in that** either the running surface (14, 16; 17; 17, 19) forms the annular section or toroidal strip in accordance with claim 13, or the rolling surfaces of the carrier rollers (3, 6; 23; 24) each form a circular arc in the axial direction.

16. The rotational bearing according to any one of the preceding claims, **characterised in that** the carrier rollers (3, 6; 23; 24; 33) are one-piece or are each axially divided at least once, preferably exactly once, into carrier roller segments (25, 26).

17. The rotational bearing according to the preceding claim, **characterised in that** the carrier roller segments (25, 26) of at least one, preferable multiple and particularly preferably all the carrier rollers (3, 6; 23; 24; 33) are connected to each other in a non-positive lock and preferably also in a positive lock, such that they can be moved axially relative to each other.

18. The rotational bearing according to any one of the preceding claims, **characterised in that** multiple carrier rollers (3, 6; 23; 24; 33) can be removed from the rotational body (1; 21) or the support body (2; 22), and the remaining carrier rollers (3, 6; 23; 24; 33) support the rotational body and rotationally mount it centred between them.

19. The rotational bearing according to any one of the preceding claims, **characterised in that** the carrier rollers (3, 6; 23; 24; 33) are rotationally mounted on carrier trunnions (4, 7) projecting from the rotational body (1; 21) or the support body (2; 22), or are connected to carrier trunnions, rotationally secured, or are formed in one piece, and are rotationally mounted by the rotational body or the support body.

20. The rotational bearing according to the preceding claim, **characterised in that** at least one of the carrier rollers (3, 6; 23; 24; 33) is mounted, secured against shifting axially, preferably on its carrier trunnion (4, 7).

21. The rotational bearing according to any one of the preceding claims, **characterised in that** the carrier roller carrier axes (T1) can be adjusted relative to the rotational body (1; 21) or support body (2; 22) forming them, preferably parallel to the rotational axis (R) of the rotational body (1; 21), and can be fixed in different adjustment positions, in order to be able to adjust a radial distance between the carrier axes (T1) and the rotational axis (R) of the rotational body (1; 21).

22. The rotational bearing according to the preceding claim, **characterised in that** the carrier trunnions (4, 7) are eccentric carrier trunnions (4, 7), each of which is connected to the rotational body (1; 21) or the support body (2; 22) such that it can rotate about a trunnion axis (T2), and each forming one of the carrier roller rotational axes (T1), spaced parallel to its trunnion axis (T2).

23. The rotational bearing according to any one of claims 1 to 8 or 16 to 22, **characterised in that** the rotational bearing is or comprises a tapered roller bearing.

24. The rotational bearing according to the preceding claim, **characterised in that** the carrier rollers formed as tapered rollers (33) are mounted such that they can be axially adjusted along the carrier roller rotational axes (T1) and fixed in adjustment positions.

25. The rotational bearing according to any one of the preceding two claims, **characterised in that** the carrier rollers (33) roll off on a conical running surface (31, 32) which points obliquely with respect to the rotational axis (R) of the rotational body (1).

26. A system for generating energy, preferably a wind power plant, which comprises a rotor driven by external energy, preferably a wind turbine, the rotational bearing of which is a rotational bearing according to any one of the preceding claims.

## Revendications

1. Ensemble de palier de pivotement d'un corps rotatif, l'ensemble de palier de pivotement comportant :
a) le corps rotatif (1 ; 21),
b) un corps de support (2 ; 22) qui supporte le corps rotatif (1 ; 21) sur un axe de rotation (R),
c) et des galets porteurs (3, 6 ; 23 ; 24 ; 33) qui supportent le corps rotatif (1 ; 21) par rapport au corps de support (2 ; 22) de manière à ce qu'il puisse tourner autour de l'axe de rotation (R) par contact de roulement avec une surface de roulement (14, 16 ; 17 ; 17, 19 ; 31, 32),
d) dans lequel les galets porteurs (3, 6 ; 23 ; 24 ; 33) sont montés, en étant supportés individuellement, de manière à pouvoir tourner autour d'axes de rotation (T1) de galets porteurs formés par le corps rotatif (1 ; 21) ou le corps de support (2 ; 22),
**caractérisé en ce que**
e) les galets porteurs (3, 6 ; 23 ; 24 ; 33) sont prévus en nombre et sont agencés autour de l'axe de rotation (R) du corps rotatif (1 ; 21) de telle sorte que chacun des galets porteurs (3, 6 ; 23 ; 24 ; 33) peut à volonté être individuellement retiré du corps rotatif (1 ; 21) ou du corps de support (2 ; 22), et les galets porteurs (3, 6 ; 23 ; 24 ; 33) qui restent encore après le retrait supportent le corps rotatif (1 ; 21) dans chaque direction radiale par rapport à l'axe de rotation, et le supportent centré de manière à pouvoir tourner,
f) et un mécanisme de réglage est prévu, au moyen duquel les galets porteurs (3, 6 ; 23 ; 24 ; 33) peuvent être déposés pour le retrait de la surface de roulement (14, 16 ; 17 ; 17, 19 ; 31, 32).

2. Ensemble de palier de pivotement selon la revendication 1, **caractérisé en ce que**
le corps rotatif (1 ; 21) forme un premier corps et le corps de support (2 ; 22) forme un second corps,
les axes de rotation (T1) des galets porteurs sont des axes fixes par rapport au corps, ou des axes réglables et immobilisables de l'un de ces corps,
et l'autre de ces corps comporte la surface de roulement (14, 16 ; 17 ; 17, 19 ; 31, 32) autour de l'axe de rotation (R) du corps rotatif (1 ; 21), sur laquelle les galets porteurs (3, 6 ; 23 ; 24 ; 33) roulent.

3. Ensemble de palier de pivotement selon la revendication précédente, **caractérisé en ce que** le corps rotatif (1 ; 21) ou le corps de support (2 ; 22) définit la surface de roulement (14, 16 ; 17 ; 17, 19 ; 31, 32) sous la forme d'une surface latérale extérieure (17 ; 17, 19) entourée par les galets porteurs (3, 6 ; 23 ; 24 ; 33) ou d'une surface latérale intérieure (14, 16 ; 31, 32) entourant les galets porteurs.

4. Ensemble de palier de pivotement selon l'une quelconque des revendications précédentes, **caractérisé en ce qu'**un corps de palier (8, 9, 11, 12 ; 18 ; 30) bloqué en rotation et de préférence relié de manière amovible au corps rotatif (1 ; 21) ou au corps de support (2 ; 22), forme la surface de roulement (14, 16 ; 17 ; 17, 19 ; 31, 32) ou une partie de la surface de roulement.

5. Ensemble de palier de pivotement selon la revendication précédente, **caractérisé en ce que** le corps de palier (8, 9, 11, 12 ; 18 ; 30) est radialement divisé en au moins deux secteurs de corps de palier qui sont bloqués en rotation mais qui sont reliés l'un à l'autre de manière séparable ou de préférence chacun individuellement soit au corps rotatif (1 ; 21) soit au corps de support (2 ; 22), dans lequel les secteurs de corps de palier forment chacun une partie de la surface de roulement (14, 16 ; 17 ; 17, 19 ; 31, 32) qui s'étend dans une direction circonférentielle autour de l'axe de rotation (R) du corps rotatif (1 ; 21) sur un angle d'au plus 180°.

6. Ensemble de palier de pivotement selon l'une quelconque des deux revendications précédentes, **caractérisé en ce que** le corps de palier (8, 9, 11, 12) par rapport à l'axe de rotation (R) du corps rotatif (1 ; 21) est divisé axialement en au moins deux, de préférence exactement deux, segments axiaux de corps de palier qui sont bloqués en rotation mais sont reliés l'un à l'autre de manière séparable ou de préférence chacun individuellement au corps rotatif (1 ; 21) ou au corps de support (2 ; 22).

7. Ensemble de palier de pivotement selon la revendication précédente, **caractérisé en ce que** les segments axiaux de corps de palier viennent en butée l'un contre l'autre dans un plan s'étendant radialement par rapport à l'axe de rotation (R), dans lequel la surface de roulement (14, 16) présente la distance radiale la plus grande ou la plus petite par rapport à l'axe de rotation (R).

8. Ensemble de palier de pivotement selon l'une quelconque des revendications 4 à 7, **caractérisé en ce que** le corps de palier (8, 9, 11, 12 ; 18 ; 30) est un corps annulaire.

9. Ensemble de palier de pivotement selon l'une quelconque des revendications 2 à 8, **caractérisé en ce que** la surface de roulement (14, 16 ; 17 ; 17, 19) est concave, de préférence bombée, par rapport à l'axe de rotation (R) du corps rotatif (1 ; 21).

10. Ensemble de palier de pivotement selon la revendication précédente, **caractérisé en ce que** la surface de roulement (14, 16 ; 17 ; 17, 19) est courbe des deux côtés dans la direction axiale vers l'axe de rotation (R).

11. Ensemble de palier de pivotement selon l'une quelconque des revendications 2 à 8, **caractérisé en ce que** la surface de roulement est convexe par rapport à l'axe de rotation (R) du corps rotatif (1 ; 21).

12. Ensemble de palier de pivotement selon la revendication précédente, **caractérisé en ce que** la surface de roulement est courbe des deux côtés dans la direction axiale en s'éloignant de l'axe de rotation (R).

13. Ensemble de palier de pivotement selon l'une quelconque des revendications 2 à 12, **caractérisé en ce que** la surface de roulement (14, 16 ; 17 ; 17, 19) est un tronçon annulaire d'une surface sphérique ou une bande d'une surface toroïdale, qui est concentrique à l'axe de rotation (R) du corps rotatif (1 ; 21).

14. Ensemble de palier de pivotement selon l'une quelconque des revendications 2 à 13, **caractérisé en ce que** la surface de roulement (14, 16 ; 17 ; 17, 19) et les surfaces de roulement des galets porteurs (3, 6 ; 23 ; 24) roulant sur la surface de roulement sont formées pour s'adapter les unes aux autres.

15. Ensemble de palier de pivotement selon la revendication précédente, **caractérisé en ce que** soit la surface de roulement (14, 16 ; 17 ; 17, 19) forme le tronçon annulaire ou la bande toroïdale selon la revendication 13, soit les surfaces de roulement des galets porteurs (3, 6 ; 23 ; 24) forment chacune un arc de cercle dans la direction axiale.

16. Ensemble de palier de pivotement selon l'une quelconque des revendications précédentes, **caractérisé en ce que** les galets porteurs (3, 6 ; 23 ; 24 ; 33) sont divisés axialement en un seul bloc ou chacun au moins une fois, de préférence exactement une fois, en segments de galet porteur (25, 26).

17. Ensemble de palier de pivotement selon la revendication précédente, **caractérisé en ce que** les segments de galet porteur (25, 26) d'au moins un, de préférence plusieurs et de manière particulièrement préférée de tous les galets porteurs (3, 6 ; 23 ; 24 ; 33) sont reliés l'un à l'autre à force et de préférence également par complémentarité de formes, de manière axialement mobile l'un par rapport à l'autre.

18. Ensemble de palier de pivotement selon l'une quelconque des revendications précédentes, **caractérisé en ce que** plusieurs des galets porteurs (3, 6 ; 23 ; 24 ; 33) peuvent être retirés du corps rotatif (1 ; 21) ou du corps de support (2 ; 22), et les galets porteurs restants (3, 6 ; 23 ; 24 ; 33) supportent le corps rotatif et le supportent centré entre ceux-ci de manière à pouvoir tourner.

19. Ensemble de palier de pivotement selon l'une quelconque des revendications précédentes, **caractérisé en ce que** les galets porteurs (3, 6 ; 23 ; 24 ; 33) sont montés de manière à pouvoir tourner sur des tourillons porteurs (4, 7) faisant saillie à partir du corps rotatif (1 ; 21) ou du corps de support (2 ; 22), ou sont reliés aux tourillons porteurs en étant bloqués en rotation, ou sont formés en un seul bloc en étant supportés par le corps rotatif ou le corps de support de manière à pouvoir tourner.

20. Ensemble de palier de pivotement selon la revendication précédente, **caractérisé en ce qu'**au moins un des galets porteurs (3, 6 ; 23 ; 24 ; 33) est monté sans pouvoir se déplacer axialement, de préférence sur son tourillon porteur (4, 7).

21. Ensemble de palier de pivotement selon l'une quelconque des revendications précédentes, **caractérisé en ce que** les axes de rotation (T1) de galets porteurs sont réglables par rapport au corps rotatif (1 ; 21) ou au corps de support (2 ; 22) qui les forment, de préférence parallèlement à l'axe de rotation (R) du corps rotatif (1 ; 21), et peuvent être fixés dans différentes positions de réglage afin de pouvoir régler une distance radiale des axes de rotation (T1) par rapport à l'axe de rotation (R) du corps rotatif (1 ; 21).

22. Ensemble de palier de pivotement selon la revendication précédente, **caractérisé en ce que** les tourillons porteurs (4, 7) sont des tourillons porteurs excentrés (4, 7), chacun d'entre eux étant relié au corps rotatif (1 ; 21) ou au corps de support (2 ; 22) de manière à pouvoir tourner autour d'un axe de tourillon (T2), et chacun formant l'un des axes de rotation (T1) de galet porteur parallèlement espacé de son axe de tourillon (T2).

23. Ensemble de palier de pivotement selon l'une quelconque des revendications 1 à 8 ou 16 à 22, **caractérisé en ce que** l'ensemble de palier de pivotement est ou comporte un palier à rouleaux coniques.

24. Ensemble de palier de pivotement selon la revendication précédente, **caractérisé en ce que** les galets porteurs ayant la forme de rouleaux coniques (33) sont montés de manière à pouvoir être réglés axialement le long des axes de rotation (T1) de galets porteurs et de manière à pouvoir être fixés dans des positions de réglage.

25. Ensemble de palier de pivotement selon l'une quelconque des deux revendications précédentes, **caractérisé en ce que** les galets porteurs (33) roulent sur une surface de roulement sphérique (31, 32) qui s'étend en oblique par rapport à l'axe de rotation (R) du corps rotatif (1).

26. Système pour la production d'énergie, de préférence une installation éolienne, comportant un rotor entraîné par une énergie externe, de préférence une turbine éolienne, dont l'ensemble de palier de pivotement est un ensemble de palier de pivotement selon l'une quelconque des revendications précédentes.
